# FASCICULE DE BREVET EUROPEEN

(11) **EP 3 362 706 B1**
(45) Date de publication et mention de la délivrance du brevet: **14.08.2019**
(21) Numéro de dépôt: 16794705.0
(22) Date de dépôt: 13.10.2016
(51) Int. Cl.: F16H 55/17, F16H 57/08, B23P 15/14

(54) **COURONNE DENTÉE POUR RÉDUCTEUR ÉPICYCLOÏDAL**
ZAHNKRANZ FÜR EIN EPIZYKLISCHES UNTERSETZUNGSGETRIEBE
RING GEAR FOR AN EPICYCLIC REDUCTION GEAR

(30) Priorité: 16.10.2015 FR 1559918
(43) Date de publication de la demande: 22.08.2018
(73) Titulaire: Safran Transmission Systems, 92700 Colombes (FR)
(72) Inventeur: AUTRAN, Pauline, Marie, Cécile, 77550 Moissy-cramayel (FR); BECK, Guillaume, 77550 Moissy-cramayel (FR); MORELLI, Boris, 77550 Moissy-cramayel (FR); PELTIER, Jordane, 77550 Moissy-cramayel (FR); CLAYETTE, Jean, 77550 Moissy-cramayel (FR)
(74) Mandataire: Pichat, Thierry
(86) Numéro de dépôt international: PCT/FR2016/052651
(87) Numéro de publication internationale: WO 2017/064429

(56) Documents cités:
- CN-A- 103 192 241
- DE-A1- 4 304 657
- FR-A1- 2 987 416

## Description

La présente invention concerne l'obtention d'une couronne dentée à monter dans un réducteur épicycloïdal.

Les réducteurs épicycloïdaux sont fréquemment utilisés dans les boitiers de réduction des moteurs aéronautiques de type turbopropulseur, pour permettre une réduction de vitesse entre la ligne moteur et l'hélice.

Les dentures sont des éléments majeurs du réducteur puisqu'elles font passer la puissance de l'arbre d'entrée à l'arbre de sortie.

Typiquement, un réducteur épicycloïdal comprend une combinaison d'éléments coaxiaux dont l'un ou plusieurs sont des couronnes, des porte-satellites qui tournent autour de l'axe commun et qui portent un ou plusieurs satellites engrenant avec une ou plusieurs roues solaires.

Et dans certains cas, il est utile que la ou les couronnes soient réalisées en deux parties que l'on assemble.

Ainsi, dans un train épicycloïdal ou planétaire, sur une denture à chevrons, à savoir une denture composée de deux dentures hélicoïdales mises en opposition de manière à annuler l'effort axial, il est nécessaire que l'un des éléments, le solaire, les satellites, ou la couronne, soit en deux parties.

Pour des raisons de fabrication, il est préférable que la couronne soit en deux parties, c'est-à-dire en deux demi-couronnes, étant précisé que l'expression « deux demi-couronnes » est à comprendre comme deux couronnes annulaires, a priori identiques, ou globalement identiques, ayant toutefois chacune, parallèlement à l'axe commun des demi-couronnes, une épaisseur inférieure (par exemple de moitié) par rapport à celle de la couronne finale obtenue par l'assemblage coaxial des deux demi-couronnes.

Le document CN 103 192 241 A divulgue un procédé selon le préambule de la revendication 1.

Etant donné que l'on vise ci-après à assurer un jeu radial nul entre les deux demi-couronnes en cause, ce qui impose un ajustement serré entre elles, et qu'il peut se trouver qu'une dent d'une des demi-couronnes ne soit pas alignée avec la dent correspondante sur la deuxième demi-couronne, un problème se pose alors quant au décalage des dentures des demi-couronnes l'une par rapport à l'autre: comment assembler ces demi-couronnes tout en assurant l'alignement de leurs dentures ?

C'est en vue d'apporter une solution à ce problème, dans le cadre d'une réalisation en série, à coût réduit (en termes de temps d'intervention) qu'il est notamment proposé que, pour aligner les dents desdites dentures, les étapes suivantes soient suivies :
- on fournit un pion de positionnement angulaire des demi-couronnes l'une par rapport à l'autre, le pion devant être reçu dans des premier et second trous respectifs desdites première et seconde demi-couronnes, devant présenter chacun une section définitive adaptée au pion,
- on perce, en référence au plan de fabrication préétabli, les premier et second trous, de sorte que le premier trou présente une première section plus petite que ladite section définitive sur la première demi-couronne et que le second trou présente une seconde section égale à ladite section définitive sur la seconde demi-couronne,
- pour chaque demi-couronne :
   - on repère plusieurs dents équidistantes les unes des autres, avec une première dent qui est plus proche du trou de sa demi-couronne respective que les autres dents, pour définir un repère commun aux deux demi-couronnes ;
   - on détermine, sur chaque dent repérée, les coordonnées multidimensionnelles, par rapport au centre de la demi-couronne, d'(au moins)un point de référence ;
   - on compare les coordonnées multidimensionnelles déterminées avec des coordonnées théoriques de ces mêmes points issues du plan de fabrication préétabli ;
   - on relève une différence entre les coordonnées déterminées et les coordonnées théoriques pour définir un écart de position desdits points ;
   - on reperce le premier trou à ladite section définitive, en le positionnant ou le centrant en fonction des écarts de position des points de référence de chaque demi-couronne de sorte que, lors de l'assemblage, chaque dent repérée de la première demi-couronne soit en regard d'une dent repérée de la deuxième demi-couronne (opposée), parallèlement audit axe, suivant le repère commun,
   - et on assemble les première et seconde demi-couronnes par engagement de façon serrée dudit pion de positionnement angulaire dans les premier et second trous, et par un ajustement serré des demi-couronnes entre elles.

Cet ajustement serré et cette prise en compte d'un décalage dû à des dentures à positionnements angulaires non identiques entre les deux demi-couronnes va sécuriser la réalisation d'une couronne complète sans défaut d'alignement axial de ses deux demi-dentures.

Et ne percer le trou plus petit par rapport aux cotes finies que dans l'une seulement des deux demi-couronnes, plutôt que de faire cette opération sur les deux demi-couronnes, a pour avantage de permettre le recalage angulaire sans multiplier des mesures entrainant une perte de précision dans ce recalage.

Pour sécuriser encore davantage l'atteinte d'un jeu radial nul majeure pour un fonctionnement optimisé d'un réducteur à train épicycloïdal, il est par ailleurs recommandé que l'étape d'assemblage des première et seconde demi-couronnes comprenne un assemblage par frettage. Ceci rend encore davantage utile la prise en compte d'un possible décalage angulaire entre les dents des demi-couronnes, ce qui justifie la méthode qui précède. En effet, une fois frettées:
- on risque un arrachement de matière en tournant,
- l'outillage et la méthode à suivre sont complexes (voir ci-après).

Un autre problème pris en compte a été celui lié à la manière de déterminer, avec sécurité, reproductibilité et de manière aussi simple et fiable que possible, l'écart de position desdits points sur la première et/ou seconde demi-couronnes.

A cette fin il est conseillé de situer chaque point de référence à la fois sur le flanc actif et sur le cercle primitif de la demi-couronne considérée.

On définit :
- le flanc actif d'une dent comme la face latérale de la dent ou une partie seulement de cette face qui vient en contact avec les dents de l'engrenage conjugué,
- et le cercle primitif comme la section droite du cylindre primitif ; son diamètre est le diamètre primitif.

Il est également conseillé que les coordonnées de chaque point de référence soient tridimensionnelles, ledit point de référence se situant alors sur un plan milieu d'extension (axiale) de la dent considérée.

Ceci résoudra la difficulté à définir la zone où mesurer la position de la dent par rapport au trou du pion d'orientation. En effet, il convient que cette zone soit assez accessible à l'appareil de mesure, que cette mesure puisse être répétitive et que la valeur mesurée soit réellement fiable.

En outre, il est conseillé qu'avant de déterminer, sur chaque dent repérée, les coordonnées multidimensionnelles du(des) point(s) de référence, on définisse au moins trois dents équidistantes les unes des autres, et de préférence qu'on définisse quatre dents équidistantes les unes des autres, réparties donc à 90° deux à deux.

Favorablement on moyennera ensuite les mesures, sur chaque demi-couronne.

Ainsi, on sécurisera la précision et la qualité de l'assemblage final, via une précision optimisée des mesures.

Les différents aspects des solutions ici présentées seront si nécessaire encore mieux compris et d'autres détails, caractéristiques et avantages de ceux-ci apparaîtront encore à la lecture de la description qui suit faite à titre d'exemple non limitatif et en référence aux dessins annexés, dans lesquels :
- la figure 1 est un schéma de situation des dentures dans un réducteur pour hélice de turbomoteur, le porte satellite qui est fixe par rapport au bâti, n'est pas représenté sur le dessin,
- la figure 2 schématise l'intérieur d'un réducteur planétaire ou épicycloïdal,
- la figure 3 est l'étape initiale d'un assemblage coaxial (axe 190 de la couronne) entre une première et une seconde demi-couronnes dentées,
- la figure 4 schématise un pion d'assemblage pour caler angulairement entre elles les demi-couronnes,
- les figures 5, 6, 7 montrent partiellement les deux demi-couronnes - la figure 8 montrent une couronne complète, assemblée, frettée,
- et la figure 9 montre les dents caractéristiques repérées pour la prise de l'écart possible de fabrication entre les deux demi-couronnes.

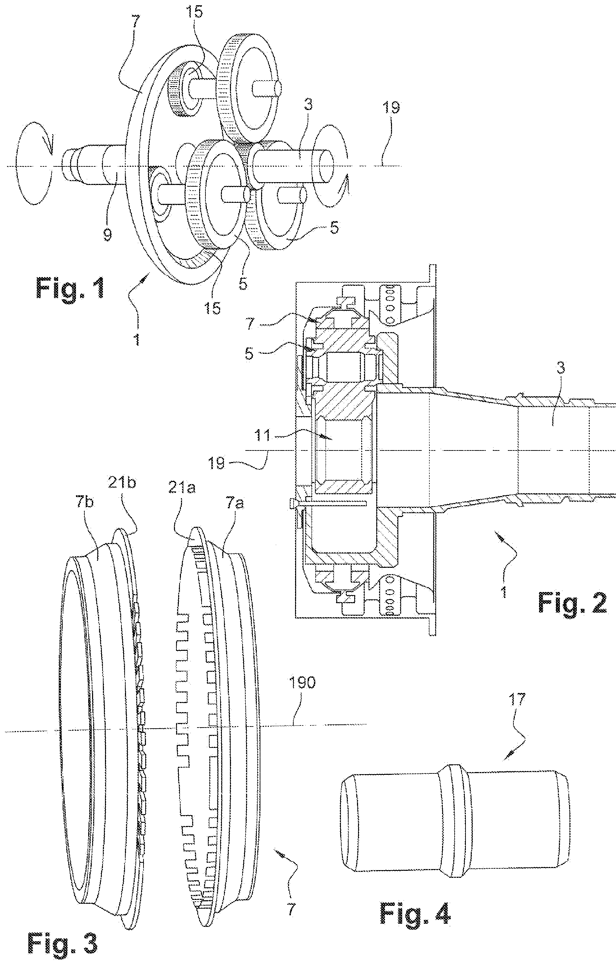

Placé entre la turbine et l'axe de l'hélice le rôle du réducteur est de réduire la vitesse de rotation de l'hélice. La figure 1 montre donc très schématiquement un réducteur planétaire ou épicycloïdal 1. Le porte-satellite qui est fixe par rapport au bâti, n'est pas représenté sur le dessin ci-dessous. On y voit en 3 l'arbre (d'entrée) de turbine, et en 5 et 7, respectivement des satellites et une couronne du réducteur épicycloïdal 1. L'arbre (de sortie) de l'hélice est en 9.

La figure 2 montre l'arbre 3 de turbine, le pignon solaire central 11, la zone 5 des satellites, ou pignons planétaires, et la couronne 7 périphérique à denture intérieure, ici hélicoïdale.

Dans l'exemple, il s'agit d'un train épicycloïdal avec dentures à chevrons.

Pour des raisons de fabrication, il a été jugé préférable que la couronne 7 soit en deux parties, c'est-à-dire en deux demi-couronnes 7a,7b, comme schématisé figure 3.

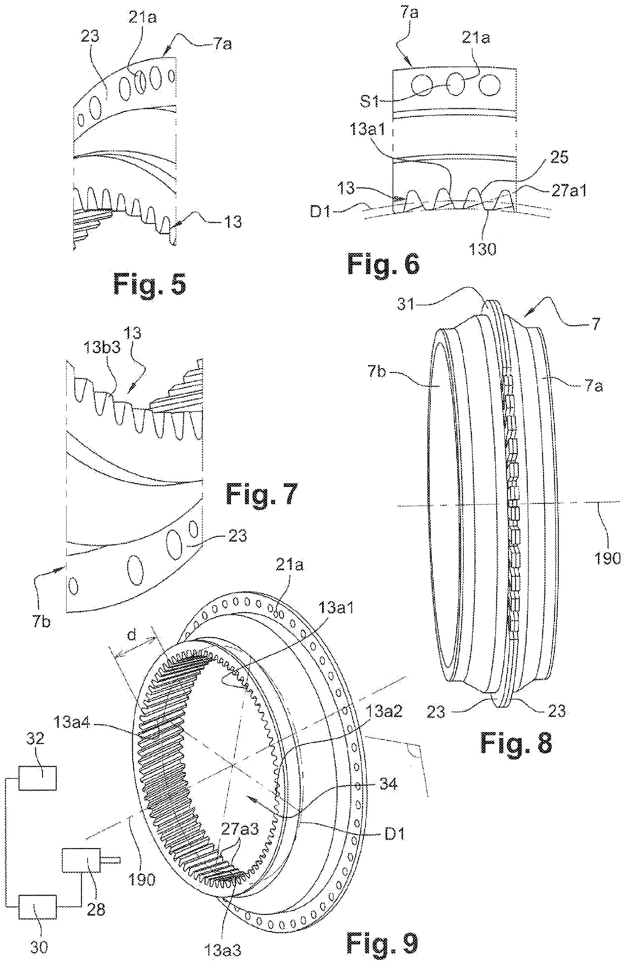

Le détail de la figure 5 schématise la réalisation de chacune de ces demi-couronnes 7a,7b, indifféremment. Ainsi, chacune d'elle comprend une denture intérieure, ici hélicoïdale, 13 sur toute sa périphérie interne, à l'image de ce qui est illustré avec le même repère figure 1, de manière qu'engrènent avec elle les dentures extérieures 15 de certains satellites, au moins.

Un positionnement relatif précis des deux demi-couronnes 7a,7b doit être assuré.

Comme schématisé figure 4, un pion 17 d'orientation, ou pion de positionnement angulaire des demi-couronnes l'une par rapport à l'autre, est prévu, à cette fin. Il va permettre un alignement des dentures des deux demi-couronnes.

Pour compléter l'effet assuré par ce pion, il est recommandé que, une fois bien positionnées l'une par rapport à l'autre, avec leurs dentures 13 alignées, y compris parallèlement à l'axe 19 (commun, dans l'exemple) de l'arbre de turbine et de l'hélice 9, ces première et seconde demi-couronnes 7a,7b soient assemblées par un ajustement serré, et en l'espèce par frettage.

Il est rappelé qu'un frettage consiste à entourer une pièce intérieure dite « frettée » par une pièce extérieure appelée « frette ». L'assemblage est réalisé avec des tolérances d'usinage qui interdisent son montage à la main ou même à la presse. Une solution, quand elle est possible sans détérioration du matériau, est de chauffer la frette pour la dilater avant de l'enfiler sur l'élément qu'il faut fretter.

Un tel assemblage par frettage implique que, pour la mise dans la position angulaire relative des demi-couronnes, il n'est plus possible de les faire tourner l'une par rapport à l'autre autour de leur axe central, une fois frettées. En effet, on risque un arrachement de matière en tournant, et l'outillage à réaliser est complexe car la force nécessaire pour assurer une rotation relative entre les demi-couronnes est alors importante, en raison du frettage. De plus, cette méthode nécessiterait de maîtriser précisément les déplacements car les rotations correctives sont faibles après la première mise en position.

La solution proposée est, en résumé, de percer, pour le pion 17, dans l'une des deux demi-couronnes un trou qui soit plus petit que la cote au plan, de mesurer le décalage angulaire des dentures respectives des deux demi-couronnes 7a,7b, et enfin de repercer le trou aux cotes finies, avant l'assemblage final.

De façon plus détaillé, le procédé proposé comprend les étapes suivantes:
D'abord, on va considérer le pion 17 de positionnement angulaire des demi-couronnes 7a,7b l'une par rapport à l'autre, en ce sens qu'il va devoir être reçu dans des premier et second trous respectifs 21a,21b desdites première et seconde demi-couronnes, ces trous devant présenter chacun une section définitive adaptée au pion.

Les trous 21a,21b seront ménagés chacun selon un axe parallèle à l'axe 190 commun des première et une seconde demi-couronnes.

Avantageusement, ils seront ménagés chacun dans une partie radiale périphérique 23 de la demi-couronne considérée entourant la denture intérieure 13, sensiblement perpendiculairement à elle.

Une particularité réside dans le fait que l'on va percer les premier et second trous 21a,21b de telle sorte que :
- le premier trou 21a présentera une première section, telle S1 figure 6, plus petite que ladite section définitive sur la première demi-couronne 7a,
- et que le second trou 21b présente une seconde section égale à ladite section définitive sur la seconde demi-couronne 7b.

Typiquement, les sections précitées pourront être des diamètres (trous de section circulaire).

Les deux trous 21a,21b ont été percés à un même emplacement théorique.

Comme illustré figure 6 pour une dent donnée, chaque dent, telle celle repérée 13a, présentera un flanc actif 25 et toutes les dents de la première, respectivement de la seconde, demi-couronne s'étendront radialement, jusqu'à leur surface d'extrémité interne 130, avec un même diamètre primitif théorique repéré D1.

Ceci fait, on va définir et repérer, sur chaque denture, plusieurs dents équidistantes les unes des autres, telles que 13a1,13a2,13a3,13a4 fig.9, avec une première dent qui est plus proche du trou (21a fig.9) de sa demi-couronne que les autres dents, afin de définir ainsi un repère commun aux deux demi-couronnes. En effet, au moment de l'assemblage final des deux demi-couronnes, il est important qu'elles soient positionnées coaxialement, face à face, avec la même position angulaire relative desdites « dents repérées ».

Puis, on va déterminer, sur chaque dent repérée, les coordonnées multidimensionnelles, par rapport au centre de la demi-couronne (axe 190), d'un point de référence.

Des coordonnées tridimensionnelles (repère orthonormé x,y,z) seront a priori préférées à des coordonnées bidimensionnelles (x,y en particulier).

Ensuite, on va venir comparer ces coordonnées multidimensionnelles relevées avec les coordonnées théoriques de ces mêmes points, issues du plan de fabrication préétabli.

En pratique, ce calcul des coordonnées théoriques aura pu être acquis bien antérieurement par relevé 3D à partir du plan de fabrication préétabli.

Pour présenter en d'autres termes ce qui précède, on peut considérer que, pour mesurer le décalage éventuel entre les chevrons des deux demi couronnes :
- sur la première demi-couronne, celle 7a avec le trou 21a du pion d'orientation percé plus petit que la cote finie :
   a/ on repèrera les dents précitées 13a1,13a2,13a3,13a4. La première dent est donc la dent la plus proche du trou 21a du pion d'orientation ;
   b/ avec une machine de repérage tridimensionnelle 28, on repèrera ou identifiera sur chacune de ces dents un point (repères 27a1,27a3 figures 6 et 9, respectivement pour les dents 13a1,13a3) qui se situera donc favorablement à la fois sur le flanc actif, sur le cercle primitif (D1) et au milieu de la dent, c'est-à-dire à mi-longueur axiale d/2, comme montré sur les illustrations (voir le plan milieu 34 d'extension axiale de la dent considérée figure 9).
   c/ considérant que les cordonnées de ladite dent seront notées x1, y1, z1 dans le calculateur 30 associé, relié à la machine de relevés 28, on disposera par ailleurs, grâce à des relevés 3D stockés en mémoire machine 32 et initialement effectués en référence au plan de fabrication préétabli desdites demi-couronnes, de la position théorique de chaque point précité repéré (tel 27a1), ses cordonnées tridimensionnelles théoriques étant notées x2, y2, z2 ;
   d/ par calcul, dans le calculateur 30, de la différence entre les cordonnées x1, y1, z1 et x2, y2, z2, on pourra donc déterminer l'écart E des coordonnées (dans les trois axes x,y,z, dans l'exemple ici expliqué), entre la position théorique et la position réelle.
- sur la seconde demi-couronne ayant le trou 21b aux cotes finies, on reproduira les étapes a) à d) ci-dessus.

On connaîtra ainsi, pour les dents (ou demi-dents) concernées, ledit écart E sur chaque demi-couronne par rapport à la position théorique ; c'est-à-dire la position prévue par le plan de fabrication.

Et on pourra donc repercer alors le trou 21a de la première demi-couronne aux cotes finies en le décalant de sorte à avoir entre les deux demi-couronnes l'écart E souhaité.

On va ainsi pouvoir tenir compte, même si l'emplacement précité des trous 21a,21b est « le même » sur les deux demi-couronnes 7a,7b si on les superpose, de la non-identité des taillages de leur dents respectives, ce qui est habituel en pratique.

Ceci fait, on assemblera suivant l'axe commun 190 les première et seconde demi-couronnes, par engagement de façon serrée dudit pion 17 dans les premier et second trous 21a,21b, et par un ajustement périphérique serré des demi-couronnes entre elles, favorablement par frettage.

Afin d'être sûr d'une qualité de dentures intérieures 13 des demi-couronnes 7a,7b, il est par ailleurs conseillé qu'avant tout perçage on ait procédé à une rectification de ces dentures, sur chaque demi-couronne, séparément. Ainsi, les dents présenteront une précision et un aspect parfait.

On aura compris que c'est la recherche d'une exactitude ou précision dans le positionnement des trous à percer et donc dans celui des demi-couronnes l'une par rapport à l'autre, angulairement parlant, qu'il est conseillé avant de calculer l'écart E :
- d'effecteur les mesures à partir de trois et de préférence (au moins) quatre dents séparées deux à deux de 90°, sur chaque demi-couronne
- et ensuite de moyenner ces mesures, sur chaque demi-couronne 7a,7b, par le calcul d'une moyenne arithmétique.

Ainsi, en pratique, on préférera, sur chaque demi-couronne, mesurer l'écart entre la position théorique de quatre dents à 90° et la position réelle de ces mêmes dents (voir figure 9), puis moyenner arithmétiquement les quatre écarts obtenus, le reperçage (si nécessaire « corrigé ») du trou du pion d'orientation sur la demi-couronne où il avait été percé plus petit annulant l'éventuel écart angulaire.

Une fois les trous 21a,21 b correctement percés, on pourra engager de façon serrée le pion 17 en partie dans chacun de ces trous, puis assembler les première et seconde demi-couronnes par l'ajustement axialement serré prévu.

Figure 8, on a schématisé en 31 la frette qui entoure et serre axialement ensemble les deux parties radiales périphériques 23 ainsi réunies coaxialement (axe 190) pour constituer la couronne unitaire finale 7.

## Revendications

1. Procédé pour assembler suivant un axe commun une première et une seconde demi-couronnes dentées (7a,7b) fabriquées suivant un plan de fabrication préétabli, **caractérisé en ce que**, pour aligner les dentures (13) suivant ledit axe commun (190), le procédé comprend des étapes où :
- on fournit un pion (17) de positionnement angulaire des demi-couronnes l'une par rapport à l'autre, le pion devant être reçu dans des premier et second trous respectifs desdites première et seconde demi-couronnes, devant présenter chacun une section définitive adaptée au pion,
- on perce, en référence au plan de fabrication préétabli, les premier et second trous (21a,21b), de sorte que le premier trou (21a) présente une première section plus petite que ladite section définitive sur la première demi-couronne (7a) et que le second trou (21b) présente une seconde section égale à ladite section définitive sur la seconde demi-couronne (7b),
- pour chaque demi-couronne :
- on définit ou repère plusieurs dents (13a1,13a2...) équidistantes les unes des autres, avec une première dent (13a1) qui est plus proche du trou (21a, 21b) de sa demi-couronne respective que les autres dents, pour définir un repère commun aux deux demi-couronnes ;
- on détermine, sur chaque dent repérée, les coordonnées multidimensionnelles (x1, y1, z1), par rapport au centre de la demi-couronne, d'un point de référence (27a3) ;
- on compare les coordonnées multidimensionnelles déterminées (x1, y1, z1) avec des coordonnées théoriques (x2, y2, z2) de ces mêmes points, issues du plan de fabrication préétabli ;
- on relève une différence entre les coordonnées déterminées et les coordonnées théoriques pour définir un écart (E) de position desdits points ;
- on reperce le premier trou (21a) à ladite section définitive, en le positionnant en fonction des écarts de position des points de référence de chaque demi-couronne de sorte que, lors de l'assemblage, chaque dent repérée de la première demi-couronne soit en regard d'une dent repérée de la deuxième demi-couronne, parallèlement audit axe (190), suivant le repère commun,
- et on assemble les première et seconde demi-couronnes (7a,7b) par engagement de façon serrée dudit pion (17) de positionnement angulaire dans les premier et second trous, et par un ajustement serré des demi-couronnes entre elles.

2. Procédé selon la revendication 1, **caractérisé en ce qu'**on situe chaque point de référence (27a3) à la fois sur le flanc actif (25) et sur le cercle primitif (D1) de la demi-couronne considérée

3. Procédé selon la revendication 1 ou 2, **caractérisé en ce que** les coordonnées de chaque point de référence sont tridimensionnelles, ledit point de référence se situant sur un plan milieu (34) d'extension de la dent considérée.

4. Procédé selon l'une des revendications précédentes, **caractérisé en ce que** l'étape d'assemblage des première et seconde demi-couronnes (7a,7b) comprend un assemblage par frettage.

5. Procédé selon l'une des revendications précédentes, **caractérisé en ce qu'**avant de percer les premier et second trous (21a,21b), on rectifie les dentures (13) sur chaque demi-couronne, séparément.

6. Procédé selon l'une quelconque des revendications précédentes **caractérisé en ce que** pour chaque demi-couronne (7a,7b) on définit au moins trois dents équidistantes les unes des autres.

7. Procédé selon l'une quelconque des revendications précédentes **caractérisé en ce que** pour chaque demi-couronne (7a,7b) on définit quatre dents équidistantes les unes des autres, réparties donc à 90° deux à deux.

## Patentansprüche

1. Verfahren zur Montage einer ersten und einer zweiten Zahnkranzhälfte (7a, 7b) an einer gemeinsamen Achse entlang nach einer vorher erstellten Fertigungszeichnung, **dadurch gekennzeichnet, dass** das Verfahren zum Ausrichten der Zahnung (13) entlang der gemeinsamen Achse (190) Schritte umfasst, in denen:
- man einen Zapfen (17) zur winkligen Positionierung der Kranzhälften zueinander bereitstellt, wobei der Zapfen in jeweils dem ersten und zweiten Loch der ersten und zweiten Kranzhälfte aufgenommen werden muss und diese Löcher jeweils einen für den Zapfen passenden fertigen Querschnitt aufweisen müssen;
- man unter Bezugnahme auf die vorher erstellte Fertigungszeichnung das erste und das zweite Loch (21a, 21b) so bohrt, dass das erste Loch (21a) einen ersten Querschnitt aufweist, der kleiner ist, als der fertige Querschnitt auf der ersten Kranzhälfte, (7a) und das zweite Loch (21b) einen zweiten Querschnitt aufweist, der genauso so groß ist, wie der fertige Querschnitt auf der zweiten Kranzhälfte (7b);
man an jeder Kranzhälfte:
- mehrere, in gleichem Abstand zueinander stehende Zähne (13a1, 13a2...) bestimmt oder kennzeichnet, wobei sich ein erster Zahn (13a) näher am Loch (21a, 21b) seiner jeweiligen Kranzhälfte befindet, als die anderen Zähne, um einen den beiden Kranzhälften gemeinsamen Bezugspunkt festzulegen;
- man an jedem gekennzeichneten Zahn die mehrdimensionalen Koordination (x1, y1, z1) eines Bezugspunktes (27a3) in Bezug auf die Mitte der Kranzhälfte bestimmt;
- man die bestimmten mehrdimensionalen Koordinaten (x1, y1, z1) mit den theoretischen Koordinaten (x2, y2, z2) dieser Punkte der vorher erstellen Fertigungszeichnung vergleicht;
- man die Differenz zwischen den bestimmten und den theoretischen Koordinaten ermittelt, um eine Positionsabweichung (E) dieser Punkte zu bestimmen;
- man das erste Loch (21a) auf den fertigen Querschnitt nachbohrt, indem man entsprechend der Positionsabweichungen Bezugspunkte jeder Kranzhälfte so positioniert, dass jeder gekennzeichnete Zahn der ersten Kranzhälfte gegenüber einem gekennzeichneten Zahn der zweiten Kranzhälfte parallel zur Achse (190), dem gemeinsamen Bezugspunkt folgend steht;
- und man die erste und die zweite Kranzhälfte (7a, 7b) durch engen Eingriff des Winkelpositionszapfens (17) in das erste und das zweite Loch und durch passgenaues Zusammenpressen der Kranzhälften montiert.

2. Verfahren nach Anspruch 1, **dadurch gekennzeichnet, dass** man jeden Bezugspunkt (27a3) sowohl auf der aktiven Flanke (25) als auch auf dem Teilungskreis (D1) der jeweiligen Kranzhälfte positioniert.

3. Verfahren nach Anspruch 1 oder 2, **dadurch gekennzeichnet, dass** die Koordinaten jedes Bezugspunkts dreidimensional sind, wobei sich der Bezugspunkt auf einer mittleren Ausdehnungsebene (34) des jeweiligen Zahns befindet.

4. Verfahren nach einem der vorhergehenden Ansprüche, **dadurch gekennzeichnet, dass** der Schritt der Montage der ersten und der zweiten Kranzhälfte (7a, 7b) eine Montage durch Aufschrumpfung umfasst.

5. Verfahren nach einem der vorhergehenden Ansprüche, **dadurch gekennzeichnet, dass** man vor dem Bohren des ersten und des zweiten Lochs (21a, 21b) die Zähne (13) an jedem Halbkranz einzeln geradestellt.

6. Verfahren nach einem der vorhergehenden Ansprüche, **dadurch gekennzeichnet, dass** man an jeder Kranzhälfte (7a, 7b) zumindest drei in gleichen Abständen zueinander stehende Zähne bestimmt.

7. Verfahren nach einem der vorhergehenden Ansprüche, **dadurch gekennzeichnet, dass** man an jeder Kranzhälfte (7a, 7b) vier in gleichen Abständen zueinander stehende Zähe bestimmt, die jeweils paarweise 90° voneinander entfernt sind.

## Claims

1. A method for assembling according to a common axis a first and a second half-ring gears (7a, 7b) manufactured according to a pre-established manufacturing drawing, **characterized in that**, to align the teeth (13) along said common axis (190), the method comprises steps wherein:
- an angular positioning pin (17) is provided for the half-ring gears in relation to each other, the pin to be received in first and second respective holes of the said first and second half-ring gears, must each have a final cross-section adapted to the pin;
- with reference to the predetermined manufacturing drawing, the first and second holes (21a,21b) are drilled such that the first hole (21a) has a first cross-section that is smaller than the said final cross-section on the first half-ring gear (7a) and that the second hole (21b) has a second equal section to the said final cross-section on the second half-ring gear (7b),
- for each half-ring gear:
- several teeth (13a1,13a2...) equidistant from each other are indexed or identified, with a first tooth (13a1) which is closer to the hole (21a, 21b) of its respective half-ring gear than the other teeth, to define a common index mark to both half-ring gears;
- on each tooth identified, the multidimensional coordinates (x1, y1, z1), with respect to the centre of the half-ring gear, of a reference point (27a3) are determined;
- the determined multidimensional coordinates (x1, y1, z1) are compared with theoretical coordinates (x2, y2, z2) of these same points from the pre-established manufacturing drawing;
- a difference is recorded between the determined coordinates and the theoretical coordinates for defining a positional deviation (E) of said points;
- the first hole is re-drilled (21a) to said final cross-section, positioning it based on the positional deviations of the reference points of each half-ring gear such that, during assembly, each tooth indexed to the first half-ring gear facing a tooth indexed from the second half-ring gear, parallel to said axis (190), according to the common index mark,
- and the first and second half-ring gears (7a,7b) are assembled by tightly engaging said angular positioning pin (17) in the first and second holes, and by a tight fit of the half-ring gears together.

2. Method according to Claim 1, **characterized in that** each reference point (27a3) is located on both the active flank (25) and on the pitch circle (D1) of the half-ring gear concerned.

3. Method according to Claim 1 or 2, **characterized in that** the coordinates of each reference point are three-dimensional, said reference point being on a middle extension plane (34) of the tooth in concerned.

4. Method according to one of the preceding claims, **characterized in that** the assembly step of the first and second half-rings (7a, 7b) comprises an interference-fit assembly.

5. Method according to one of the preceding claims, **characterized in that** before drilling the first and second holes (21a, 21b), the teeth (13) on each half-ring gear are rectified, separately.

6. Method according to any one of the preceding claims **characterized in that** for each half-ring gear (7a, 7b) at least three equidistant teeth are defined from each other.

7. Method according to any one of the preceding claims **characterized in that** for each half-ring gear (7a, 7b) four equidistant teeth are defined from each other and thus distributed at 90° in pairs.
